# EUROPEAN PATENT SPECIFICATION

(11) **EP 2 862 141 B1**
(45) Date of publication and mention of the grant of the patent: **19.09.2018**
(21) Application number: 13747697.4
(22) Date of filing: 11.06.2013
(51) Int. Cl.: G06Q 30/02, H04W 4/60, G06Q 30/00

(54) **WHOLESALE PARTNER AND VIDEO SERVICES ENABLEMENT USING A MOBILE VIRTUAL NETWORK ENABLER (MVNE)**
GROSSHANDELSPARTNER UND VIDEODIENSTAKTIVIERUNG UNTER VERWENDUNG EINES MOBILEN VIRTUELLEN NETZWERKAKTIVATORS
PARTENAIRE GROSSISTE ET FACILITATION DE SERVICES VIDÉO À L'AIDE D'UN FACILITATEUR DE RÉSEAU VIRTUEL MOBILE (MVNE)

(30) Priority: 15.06.2012 US 201261660313 P; 18.03.2013 US 201313845751
(43) Date of publication of application: 22.04.2015
(73) Proprietor: Telefonaktiebolaget LM Ericsson (publ), 164 83 Stockholm (SE)
(72) Inventor: CONNOR, Brenda Ann, Dallas, Texas 75287 (US); KABRE, Ravindra, Plano, Texas 75025 (US); CAMPBELL, Loudon Lee, Plano, Texas 75075 (US); DEVULAPALLI, Saikumar, Allen, Texas 75013 (US); PETERS, Steve, Plano, Texas 75074 (US)
(74) Representative: Brann AB
(86) International application number: PCT/IB2013/054788
(87) International publication number: WO 2013/186708

(56) References cited:
- US-A1- 2007 206 571
- EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291

## Description

### TECHNICAL FIELD

The present disclosure generally relates to providing Internet Protocol (IP) multimedia services to subscribers of an enterprise that is not a client of a Mobile Network Operator (MNO). More particularly, and not by way of limitation, particular embodiments of the inventive aspects disclosed in the present disclosure are directed to a Mobile Virtual Network Enabler (MVNE) having IP Multimedia Subsystem (IMS) core elements to facilitate delivery of high speed data associated with the IP multimedia services to the subscribers of the enterprise via the mobile network of the MNO.

### BACKGROUND

In the telecommunication world, a telecom operator may offer its network capacity for retail consumption (e.g., by individual human subscribers) or for wholesale consumption. The traditional wholesale partner relationship enabled by a telecom operator follows a Mobile Virtual Network Operator (MVNO) model. An MVNO enters into a business agreement with a telecom operator (e.g., a Mobile Network Operator (MNO)) to obtain bulk access to network services at wholesale rates, and then the MVNO sets retail prices independently of the MNO. It is noted here that for the sake of convenience the terms like "telecom operator" and "network operator" (or terms having similar import) are used interchangeably herein with the terms "mobile operator" and "MNO". However, it is observed that a telecom operator may be a non-mobile network operator as well (e.g., a landline telephone service provider or a Public Switched Telephone Network (PSTN) operator). Because the disclosure below primarily relates to mobile telecommunication networks, the term "MNO" is frequently used below to refer to network operators of such mobile networks (even though such mobile networks may include portions of, e.g., Public Land Mobile Networks (PLMN), PSTN's, IMS based networks, or satellite links). It is however noted that inventive aspects of the present disclosure apply to other non-mobile telecom operators as well.

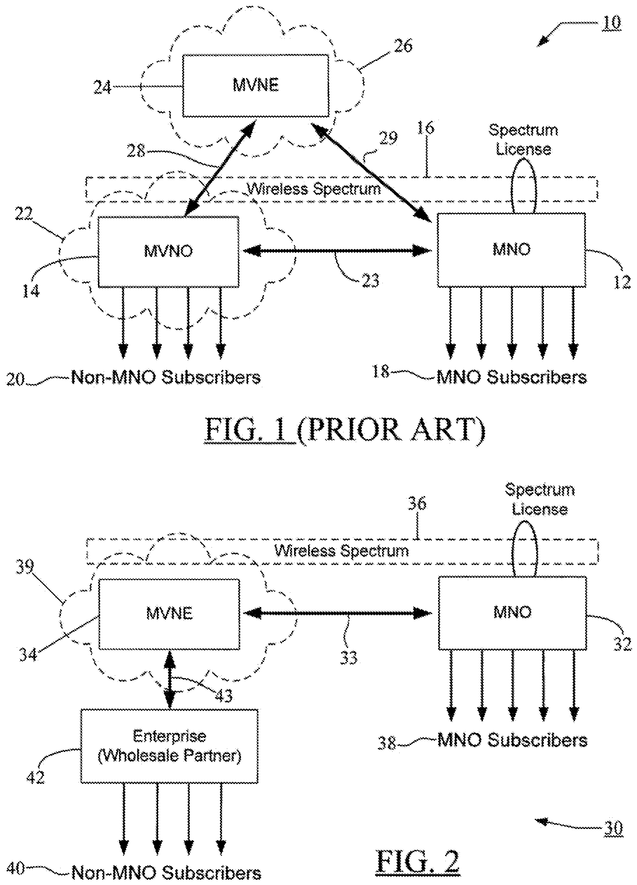

FIG. 1 shows an arrangement 10 illustrating a traditional operative relationship between an MNO 12 and an MVNO 14. As shown in FIG. 1, the MNO 12 may own a spectrum license to a specific wireless spectrum 16 (shown dotted in FIG. 1) that the MNO 12 may use to offer wireless services (e.g., cellular phone or data plans) to its subscribers 18 through the MNO's network infrastructure (not shown) (which may include an extensive wireless network spanning a specific geographical region). As mentioned earlier, the MNO 12 may have individual as well as wholesale clients as its telecom subscribers 18. In contrast to the MNO 12, the MVNO 14 is characterized by neither having its own mobile/spectrum license nor having its own mobile network infrastructure. However, the MVNO 14 has direct customer relationships with its own end users, which may be referred to as "non-MNO subscribers" 20 as shown in FIG. 1. For example, a pre-paid cellular service provider may be an MVNO. As shown in FIG. 1, the MVNO 14 may be a cloud-based entity (as indicated by the dotted cloud 20) that handles network routing itself and will typically have business arrangements (e.g., roaming agreements) with other traditional mobile operators (MNO's 12) to buy Minutes of Use (MOU) for sale to the MVNO's own customers 20 (which are different from the MNO's subscribers 18).

A typical MVNO handles customer service, customer billing, collection of consumption data, and handset/device management. In other words, MVNO's have full control over the Subscriber Identification Module (SIM) card allocation, branding, marketing, billing, and customer care operations. Furthermore, the MVNO 14 will usually handle marketing and sales to end users itself. Thus, even though the MVNO 14 does not have hardware resources (i.e., network infrastructure) of a mobile network operator or a spectrum license, the MVNO still has all the full-scale operator technology of a mobile operator (including own SIM cards, own subscriber provisioning, own billing, own subscriber base, and own roaming agreements). Many successful MVNO's position their operations and brands in such a manner that their customers do not distinguish any significant differences in service or network performance in comparison with an MNO's offerings, yet these MVNO's offer some special affinity or value-added services (e.g., through owning or operating a mobile Intelligent Network (IN) infrastructure) to differentiate themselves from a mobile operator (MNO). Thus, an MVNO can treat MNO's network infrastructure and spectrum 16 as a commodity, and then go beyond that to offer value to its clients. In that regard, an MVNO is clearly distinguishable from a simple "reseller" of telecom services.

Under the MVNO model shown in FIG. 1, a major benefit the traditional mobile operator (e.g., the MNO 12) may receive by cooperating with an MVNO (e.g., the MVNO 14) is to broaden the MNO's customer base (e.g., by selling additional MOUs) at a zero cost of acquisition and to also allow exploitation of its excess/unused network capacity. Furthermore, by embracing an MVNO, the MNO may derive additional revenue to offset the enormous cost of building its wireless networks. In FIG. 1, the interaction between the MNO 12 and the MVNO 14 (e.g., usage of MNO's spectrum and network resources, establishing a roaming agreement with the MNO 12, etc.) is illustrated using the bi-directional arrow 23.

The arrangement 10 in FIG. 1 illustrates another cloud-based entity-i.e., a Mobile Virtual Network Enabler (MVNE) 24 (indicated within a dotted cloud 26). The MVNE 24 in the traditional arrangement 10 does not have a relationship with end-user customers or subscribers (e.g., subscribers 18, 20). Instead, the MVNE 24 may be a company that offers infrastructure and provides services to MVNOs such as billing, network element provisioning, administration, operations, Operations Support System (OSS)/Business Support System (BSS) support, and provisioning of back end network elements. The MVNE may sit between the MNO 12 and a wholesale partner, which may be an MVNO. Thus, the MVNE 24 enables the MVNO's 14 provision of mobile network services (like cellular phone connectivity) to MVNO's subscribers 20. Some MVNOs may completely rely on the underlying wireless network infrastructure of the host MNO, whereas other MVNOs may want to own and/or control their own network elements. MVNEs can assist both of these MVNOs in the sense that MVNEs can provide options to MVNOs for what they bring in-house versus what they rely on the host carrier. Thus, an MVNE provides infrastructure and services to enable MVNOs to offer services to and have a relationship with MVNO-specific end-user customers. MVNEs (e.g., the MVNE 24) offer the ability for an MVNO (e.g., the MVNO 14) to focus on MVNO's core strengths of brand, customer loyalty and marketing, while leaving the back-end enablement and operations support to the MVNE. In FIG. 1, interactions between the MVNO 14 and the MVNE 24 are illustrated using the bi-directional arrow 28. Interactions between the MNO 12 and the MVNE 24 are illustrated using the bi-directional arrow 29. It is noted here that the clouds 22 and 26 are shown to indicate remote, non-proximate, or virtual implementation of MVNO and MVNE structures, operations, and functionalities vis-à-vis the network and operations of the MNO 12.

An MVNE can benefit an MVNO in the sense that MVNO can defer capital expenditures and/or achieve cost reductions while allowing the MVNO to focus on the customer relationships rather than back-end operations. Also, an MVNO associated with an MVNE may arguably customize its offerings further than an MVNO that is totally reliance on the host MNO. With an MVNE, an MVNO could literally use the host mobile network for only radio and switching infrastructure, while outsourcing everything else to the MVNE.

Recently, telecom operators (e.g., MNOs) have started opening up their networks via network Application Programming Interfaces (APIs) to monetize the access to telecom operator-specific assets. These APIs are exposed via a Service Delivery Platform (SDP), which refers to a set of program components that are architected to leverage different capabilities of the telecom operator and expose them to a subscriber in a standardized fashion. The SDP platform typically sits between a service application (associated with the API) and the telecom operator's network, and manages authentication, authorization, service orchestration, policy management, traffic management, and charging/billing. Many telecom operators (including MNOs) have their own version of SDP infrastructure that exposes both internally and externally created service(s) (e.g., subscriber-specific service plan offerings, phone promotions, data usage monitoring, etc.). These services are available as a set of web service interfaces or API's that can be invoked by any application (e.g., an application executed on a subscriber device of an MNO subscriber 18). The most common methods of exposing these interfaces are either via a Simple Object Access Protocol (SOAP) interface or via Representational State Transfer (REST). The SDP platforms enforce a predetermined service level for each corresponding application and also generate billing records for mediation and charging.

US 2007/0206571 describes a method for enabling an enterprise to effectively become a Mobile Virtual Network Operator for its own employees.

### SUMMARY

The above-mentioned service capabilities are typically provided by the telecom operator (e.g., an MNO) for the operator's Subscribers (e.g., subscribers 18 in FIG. 1). Only the telecom operator's customers are guaranteed target users for network APIs. A wholesale customer or enterprise (e.g., a corporate entity, a university, an Internet Service Provider (ISP), a hospital, etc.) is generally not considered as a telecom operator's "subscriber." Similarly, an MVNO also may not be considered a "subscriber" in this regard. Thus, wholesale customers of the MNO are not intended target users for operator-provided APIs.

Before proceeding further, it is noted here that the terms "enterprise," Wholesale customer," and "wholesale partner" used herein are examples of MVNOs that may benefit from the services provided by an MVNE.

Enterprises desire to maintain their independence of a customer base (e.g., enterprise-specific subscribers) from the MNO, while taking advantage of the wholesale data plans (or other services) available via the MNO. Additionally, enterprises also desire to be enabled to offer innovative services that (1) utilize the availability of high speed data over Wireless Fidelity (Wi-Fi) and over an MNO's access network (e.g., a Long Term Evolution (LTE) network or wireline network); (2) leverage the service capabilities available from telecom operators; and (3) customize the end-user experience provided through tablets, smart phones, and other advanced wireless devices with Wi-Fi, LTE, and other high speed data access technologies.

As mentioned, in addition to using the high speed access available via the MNO (e.g., via MNO's LTE network), an enterprise also utilizes private and public Wi-Fi. Typically, the high speed access available via the MNO is used when: (1) the Wi-Fi access is not available, or (2) the MNO provides better Quality of Service (QoS) than that available via Wi-Fi. For example, in case of video services, the MNO-provided LTE access network generally provides an advantage over Wi-Fi regarding QoS for carrying video traffic. In that case, an enterprise may prefer to use the MNO's LTE resources for the enterprise's subscribers. However, because an enterprise is less likely to have more than 100,000 clients, the enterprise may not have the volume to justify becoming an MVNO itself (or another type of wholesale partner of the MNO) so as to avail itself of the MNO's volume-based offerings and services (which may include access to MNO's web service interfaces or APIs for enterprise's subscribers).

In the current heavy data usage based environment, an enterprise may look for a solution space that includes a mix of Machine-to-Machine (M2M) and human interaction use cases (by its subscribers), with high speed data as the cornerstone of the service(s) that may be utilized by its subscribers through MNO's network. One such service is a video service (e.g., video conferencing, video surveillance, etc.) that typically requires transmission and reception of large volume of high speed data. It is therefore reasonable to assume that when an enterprise cannot justify becoming an MVNO itself, the enterprise (or wholesale partner) may attempt to leverage an existing MVNO or MVNE to obtain favorable service terms (including QoS) for its subscribers' access to MNO's network.

To accommodate volume business from such non-MNO enterprises, a hybrid business model (e.g., as shown in FIG. 2 and discussed later below) may emerge to provide a low barrier to entry for the enterprises and low barrier to entry for the MNOs. The hybrid business model may be between the wholesale (e.g., as shown in FIG. 1) and traditional enterprise models (e.g., when the enterprise directly becomes a wholesale client of the MNO) to enable a wholesale data plan for enterprise's subscribers yet also allowing those subscribers access to other MNO service capabilities (e.g., multimedia offerings, sophisticated device applications (apps), newer and feature-rich devices/hardware, etc.) in a way the MNO can monetize.

It is observed here that existing wholesale providers (e.g., MVNOs) and MVNEs have been optimized for circuit-switched voice. Although some solutions have data plans as add-ons, the primary focus in the traditional wholesale model is still on offering a number of different voice plans (e.g., x minutes/month or y minutes of talk time in a pre-paid package), at corresponding price points. Also, existing M2M solutions are optimized for data plans only when small amounts of data are sent periodically or infrequently. In the context of an MVNO or other wholesale partner of an MNO, the traffic is not differentiated by the MNO and, hence, is typically delivered on a "best effort" basis. However, such lower threshold of treatment for subscriber content may not be desirable in many high speed (and time-sensitive) data applications. For example, in case of a hospital streaming real-time video of patients in intensive care units, any delay in the delivery of patients' video data resulting from the "best effort" delivery platform may be not only unacceptable, but could have potentially serious legal ramifications. Similarly, in case of a high level corporate video conference or in case of real-time video surveillance of sensitive premises, the "best effort" delivery of video data remains unacceptable.

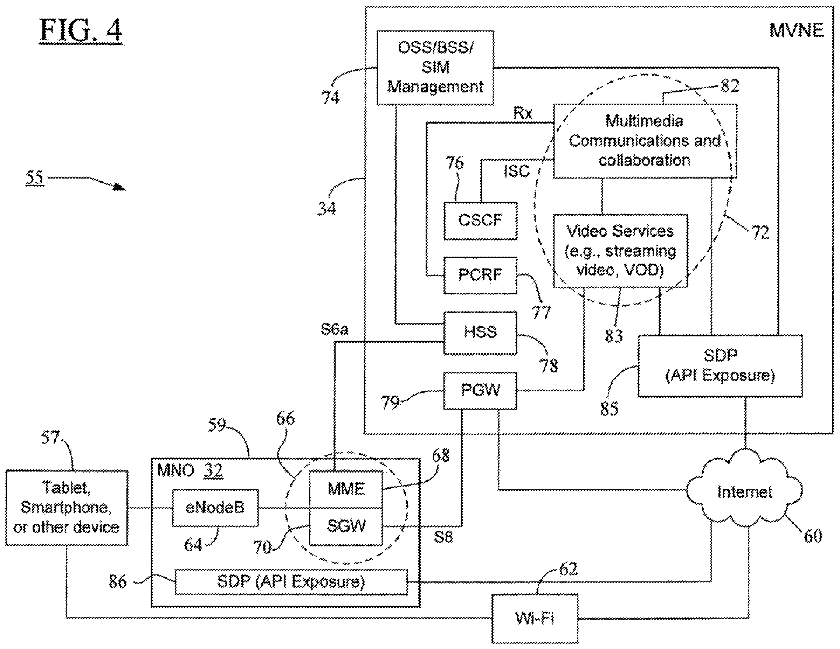

Hence, it is desirable to devise a solution or service model (e.g., the hybrid model shown in FIGs. 2 and 4 discussed later below) that enables subscribers of an enterprise (which itself is not a client of an MNO) to obtain an enterprise-specific high speed data access at a guaranteed Quality of Service (QoS) through a mobile network of the MNO.

Particular embodiments of the present invention are directed to an MVNE comprising a plurality of IMS core elements to facilitate delivery of high speed data associated with IP multimedia services (which may include heavy video or audio-visual content) to the subscribers of the enterprise via the mobile network of the MNO. The solution according to the present disclosure thus provides IP multimedia services (and, more particularly, video services) to subscribers of an enterprise at a guaranteed QoS basis even if the enterprise is not a client of the MNO.

More specifically, particular embodiments of the present disclosure relate to creation of an MVNE with a very low barrier to entry for enterprises and for telecom operators. The MVNE can scale down to meet specialized market needs of an enterprise's subscribers. The solution according to the present disclosure thus provides for: (1) an MVNE as a roaming partner to an MNO, (2) business processes in the MVNE for on-boarding of the wholesale partner/enterprise, (3) business processes in the MVNE for on-boarding of the clients/subscribers of the wholesale partner, (4) activation and attachment (to the MNO's network) of a non-MNO device (used by or allotted to an enterprise client) via the MVNE, (5) assignment of non-MNO subscriber's access credentials by the MVNE to the MNO to enable the enterprise's subscriber/client to avail itself of IP multimedia services through the MNO's network, and (6) invocation of MNO's APIs (via the MVNE) with non-MNO subscriber's access credentials.

In one embodiment, the present disclosure is directed to an MVNE, as further defined in claim 1.

In a further embodiment, the present disclosure is directed to a method of operating an MVNE, as further defined in claim 12.

The solution according to particular embodiments of the present disclosure minimizes the impact to the MNO by modeling the MVNE as a roaming partner to the MNO. The MNO can leverage its existing roaming agreement with the MVNE without the need to negotiate any extra agreements with the MVNE. Further, allocation and utilization of an MNO's SIM card numbering by the MVNE would minimize the barrier to entry for the enterprises served by the MVNE. In case of the MNO, its association with the MVNE enables the MNO to exploit MNO's service capabilities to provide monetizeable services to MVNE's subscribers.

### BRIEF DESCRIPTION OF THE DRAWINGS

In the following section, the invention will be described with reference to exemplary embodiments illustrated in the figures, in which:
FIG. 1 shows an arrangement illustrating a traditional operative relationship between an MNO and an MVNO;
FIG. 2 depicts an arrangement showing operative relationship between an MNO and an MVNE according to one embodiment of the present disclosure;
FIG. 3 is an exemplary flowchart depicting steps that may be performed by an MVNE according to the teachings of one embodiment of the present disclosure;
FIG. 4 shows an end-to-end architecture that uses an MVNE according to one embodiment of the present disclosure to enable a wholesale partner in providing IP multimedia services (including video services) to its subscribers; and
FIG. 5 depicts an exemplary authentication sequence for initial registration of a non-MNO subscriber device in an MNO network.

### DETAILED DESCRIPTION

In the following detailed description, numerous specific details are set forth in order to provide a thorough understanding of the disclosure. However, it will be understood by those skilled in the art that the disclosed invention may be practiced without these specific details. In other instances, well-known methods, procedures, components and circuits have not been described in detail so as not to obscure the present disclosure. Additionally, it should be understood that although the disclosure is described primarily in the context of an LTE cellular telephone/data network, the described invention can be implemented in other networks (cellular or non-cellular) as well.

Reference throughout this specification to "one embodiment" or "an embodiment" means that a particular feature, structure, or characteristic described in connection with the embodiment is included in at least one embodiment of the present disclosure. Thus, the appearances of the phrases "in one embodiment" or "in an embodiment" or "according to one embodiment" (or other phrases having similar import) in various places throughout this specification are not necessarily all referring to the same embodiment. Furthermore, the particular features, structures, or characteristics may be combined in any suitable manner in one or more embodiments. Also, depending on the context of discussion herein, a singular term may include its plural forms and a plural term may include its singular form. Similarly, a hyphenated term (e.g., "real-time," "Wi-Fi", "enterprise-specific," etc.) may be occasionally interchangeably used with its non-hyphenated version (e.g., "real time," "WiFi", "enterprise specific," etc.), a capitalized entry (e.g., "Wi-Fi") may be interchangeably used with its non-capitalized version (e.g., "wi-fi"), and plural terms may be indicated with or without an apostrophe (e.g., MNO's or MNOs, MVNE's or MVNEs, etc.). Such occasional interchangeable uses shall not be considered inconsistent with each other.

It is noted at the outset that the terms "coupled," "operatively coupled," "connected", "connecting," "electrically connected," etc., are used interchangeably herein to generally refer to the condition of being electrically/electronically connected in an operative manner. Similarly, a first entity is considered to be in "communication" with a second entity (or entities) when the first entity electrically sends and/or receives (whether through wireline or wireless means) information signals (whether containing voice information or non-voice data/control information) to/from the second entity regardless of the type (analog or digital) of those signals. It is further noted that various figures (including component diagrams) shown and discussed herein are for illustrative purpose only, and are not drawn to scale.

FIG. 2 depicts an arrangement 30 showing operative relationship between an MNO 32 and an MVNE 34 according to one embodiment of the present disclosure. The MNO 32 in FIG. 2 may be similar to the MNO 12 in FIG. 1. For example, the MNO 32 may own a spectrum license to a specific wireless spectrum 36 (shown dotted in FIG. 2) that the MNO 32 may use to offer wireless services (e.g., cellular phone or data plans) to its subscribers 38 through the MNO's network infrastructure (not shown) (which may include an extensive wireless network spanning a specific geographical region). Like MNO 12 in FIG. 1, the MNO 32 in FIG. 2 also may have individual as well as wholesale clients as its telecom subscribers 38. In one embodiment (e.g., in the embodiment shown in FIG. 4), the carrier network of the MNO 32 may be an LTE network. In FIG. 2, the interaction between the MNO 32 and the MVNE 34 (e.g., usage of MNO's spectrum and network resources, establishing a roaming agreement with the MNO 32, etc.) is illustrated using the bi-directional arrow 33.

As in case of the MVNE 24 in FIG. 1, the MVNE 34 also may be a cloud-based entity (as indicated by the dotted cloud 39 in FIG. 2). General details of an MVNE are provided earlier with reference to the MVNE 24 in FIG. 1 and, hence, are not repeated herein for the sake of brevity. Although those earlier-mentioned features and characteristics apply to the MVNE 34 in FIG, 2, the MVNE 34 in FIG. 2 is distinguishable from the MVNE 24 in FIG. 1 in the sense that the MVNE 34 itself (as opposed to the MVNO 14 in FIG. 1) functions as a roaming partner to the MNO 32 and the MVNE 34 is configured to include IMS core elements (as discussed later with reference to FIG. 4) that enable the MVNE 34 to provide IP multimedia services to the subscribers (e.g., the non-MNO subscribers 40 in FIG. 2) of an enterprise (e.g., the enterprise 42 in FIG. 2) via the mobile network (e.g., an LTE network (not shown)) of an MNO (e.g., the MNO 32 in FIG. 2).

As mentioned earlier, the enterprise or wholesale partner 42 may be a corporate entity, a hospital, a university, etc. The subscribers 40 may be corporate employees who are offered various voice and data plans through their enterprise employer 42, or university personnel (e.g., staff, faculty, students, etc.) in case the enterprise 42 is a university, etc. The enterprise 42 may have paying as well as non-paying "subscribers." For example, a hospital as an enterprise 42 may simply allot-e.g., as part of its healthcare mission-wireless devices to its patients, doctors, and/or staff (the "subscribers" 40) without charging them any fees for the devices or wireless services. The present disclosure remains applicable in that context as well. In other words, presence or absence of financial transactions between the enterprise 42 and its subscribers 40 is not relevant to the instant disclosure. What is relevant here is that there has to be some relationship (e.g., hospital-doctor, corporation-employee, university-faculty, etc.) between the enterprise 42 and its subscribers 40 that allows the enterprise 42 to be a "representative" of its subscribers 40 when negotiating and procuring telecom services on their behalf from the MVNE 34. In FIG. 2, the interaction between the MVNE 34 and its wholesale partner 42 (e.g., negotiation of an enterprise-specific data package/plan, submission of subscription information for enterprise's subscribers 40, registration of enterprise's subscribers 40 via the MVNE 34, etc.) is illustrated using the bi-directional arrow 43.

FIG. 2 provides a hybrid business model between the traditional wholesale (as in the case of FIG. 1) and traditional enterprise models (e.g., when the enterprise directly becomes a wholesale client of the MNO)-in which enterprise subscribers are customers 38 of the operator (MNO) 32-to enable an enterprise (e.g., the enterprise 42) that is not a client of the MNO 32 to utilize enterprise-specific high speed data access through the MNO's network at a guaranteed QoS and to access operator-provided APIs over arrow 33 that traditionally are only available to the operator's customers 38. Such high-speed data delivery is made possible through the MVNE 34 that acts as a roaming partner to the MNO 32 and that provides additional operational support (as discussed below with reference to FIGs. 4-5) to facilitate optimized data access and API access for MVNE's enterprise client 42 and its subscribers 40. In one embodiment, the term "enterprise-specific high speed data" may refer to a certain predetermined data transfer speed (for IP multimedia content, including video data) agreed between the enterprise 42 and the MVNE 34 to be offered to enterprise's subscribers 40 at a guaranteed QoS through the MNO's carrier network (e.g., an LTE network). This embodiment provides the capability to request the differentiated QoS treatment via arrow 33.

It is noted here that, in one embodiment, the MVNE 34 may act as a "representative" of multiple enterprises 42 in its rate negotiations with the MNO 32 (without necessarily disclosing identities of its enterprise clients or their subscribers). The MVNE 34 may effectively leverage the "aggregation" of non-MNO subscribers from a plurality of enterprises to obtain wholesale pricing, volume discount, or other favorable rate treatment from the MNO 32 for MVNE's enterprise clients. As mentioned earlier, due to its smaller subscriber base, an individual enterprise 42 may not be in a commercially advantageous position to negotiate such rate treatment on its own. However, when many such enterprises 42 are represented collectively through the MVNE 34, each enterprise 42 can obtain favorable or competitive rates from the MNO 32 for its enterprise-specific non-MNO subscribers 40.

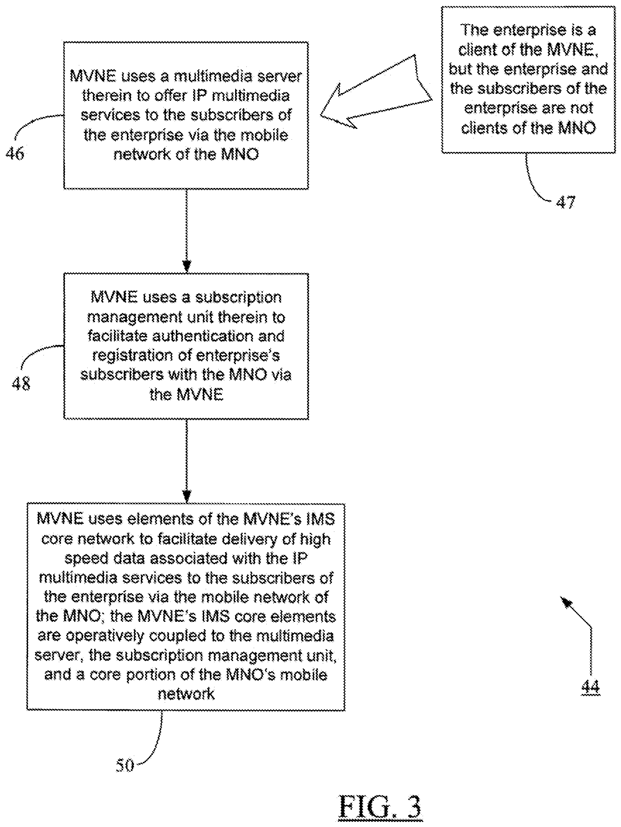

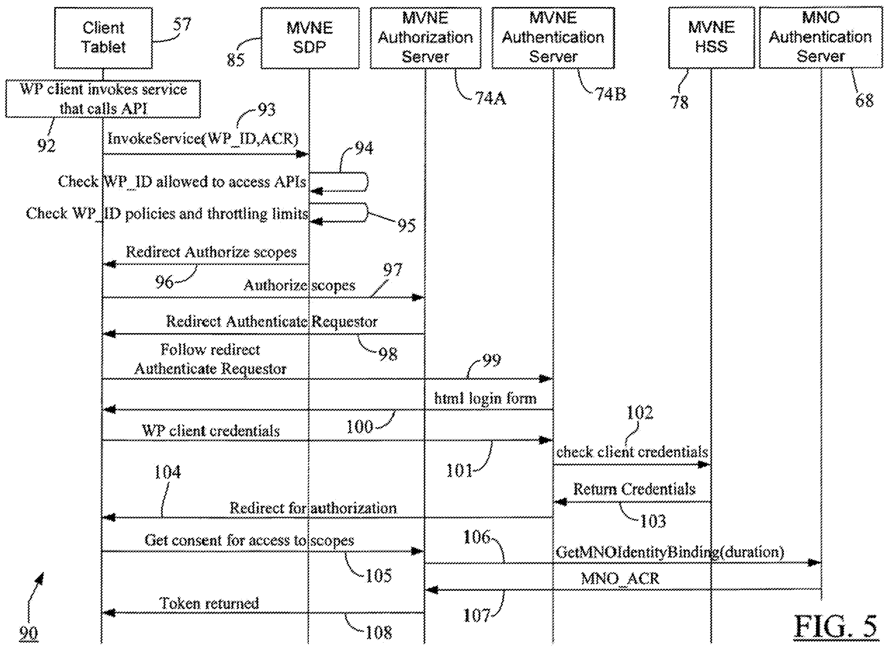

FIG. 3 is an exemplary flowchart 44 depicting steps that may be performed by an MVNE (e.g., the MVNE 34 in FIG. 2) according to the teachings of one embodiment of the present disclosure. Further details of each step are provided later in the context of discussion of FIGs. 4 and 5. As mentioned earlier, the MVNE 34 according to one embodiment of the present disclosure may include therein, own, or operatively control IMS core elements (shown in more detail in FIG. 4) to enable the MVNE 34 to offer IP multimedia services to the subscribers 40 of its enterprise client 42 using MNO's 32 wireless network (not shown). In one embodiment, as shown at block 46 in FIG. 3, the MVNE 34 may use a multimedia server therein (e.g., the multimedia server 72 shown in FIG. 4) to offer such IP multimedia services to the subscribers 40 of its wholesale partner 42 via the mobile network (not shown) of the MNO 32. As noted earlier and as indicated at block 47, the enterprise 42 may be a client (e.g., a wholesale partner or wholesale client) of the MVNE 34, but the enterprise 42 and its subscribers 40 are not clients of the MNO 32. Such subscribers 40 are thus referred to as "non-MNO subscribers" in FIG. 2 to distinguish them from the MNO's direct clients/subscribers 38 (which may be individual or wholesale clients as mentioned earlier). As shown at block 48 in FIG. 3, the MVNE 34 may also use a subscription management unit therein (e.g., the unit 74 shown in FIG. 4) to facilitate authentication and registration of enterprise's subscriber 40 with the MNO 32 (i.e., within the MNO's mobile network) via the MVNE 34. In one embodiment, the subscription management unit may be configured to aggregate a number of subscribers from a plurality of enterprise clients of the MVNE to obtain wholesale pricing from the MNO for each enterprise client of the MVNE. In that case, the MVNE 34 may further use the subscription management unit to obtain favorable rate treatment for its enterprise clients. Finally, as shown at block 50 in FIG. 3, the MVNE 32 may use elements of the MVNE's core network (which are shown in detail in FIG. 4, items 76-78) to facilitate delivery of various IP multimedia services to the subscribers 40 of the enterprise 42 via the mobile network (represented by eNodeB 64 and SGW 70) of the MNO 32. To accomplish such data delivery, the IMS core elements may be operatively coupled to the multimedia server and the subscription management unit in the MVNE 32, and also to a core portion of the MNO's mobile network as shown in detail in FIG. 4 and discussed later.

FIG. 4 shows an end-to-end architecture 55 that uses an MVNE (e.g., the MVNE 34 in FIG. 2) according to one embodiment of the present disclosure to enable a wholesale partner (e.g., the enterprise 42 in FIG. 2) in providing IP multimedia services (including video services) to its subscribers (e.g., non-MNO subscribers 40 in FIG. 2). In FIG. 4, a non-MNO device 57 is shown to be in communication with the MVNE 34 via a carrier network 59 of the MNO 32. The non-MNO device 57 may also be in communication with the MVNE 34 via a public or private Wi-Fi network 62 and an IP network such as, for example, the Internet 60. Although not shown in FIG. 4, the MVNE 34 also may be coupled to a circuit-switched network such as a Public-Switched Telephone Network (PSTN) to offer additional connectivity options to the device 57. Similarly, although not shown, the wireless carrier network 59 also may be coupled to the Internet 60 and/or the PSTN (not shown).

It is noted here that the non-MNO device 57 may be a wireless communication device that is capable of voice and/or data communication via the wireless carrier network 59 and also capable of being mobile. The device 57 also may be IMS-enabled so that it can register directly with the MVNE's IMS system. Alternatively, if the device 57 is not an IMS terminal, it can still connect to the IMS through appropriate gateways (not shown) as is known in the art. The device 57 is referred to as a "non-MNO" device because the user or subscriber 40 operating that devices is not a client of the MNO 32. Therefore, although the SIM number for the device 57 may be an authorized SIM number allotted by the MNO 32, the device itself may be configured specifically for the clients of the MVNE 34-i.e., the device 57 may be sold or allocated to the subscriber 40 by the MVNE 34, branded with MVNE's logo and information, and configured according to MVNE-specific requirements.

The device 57 may be interchangeably referred to herein using terms such as "mobile handset," "wireless handset," "wireless device," "terminal," and "User Equipment (UE)". Some examples of such mobile handsets/devices include cellular telephones or data transfer equipments (e.g., a Personal Digital Assistant (PDA) or a pager), smartphones (e.g., iPhone™, Android™, Blackberry™, etc.), computers, Bluetooth® devices, tablets, or any other type of user devices capable of operating in a wireless environment. Similarly, the terms "wireless network" or "carrier network" may be used interchangeably herein to refer to a wireless communication network (e.g., a cellular network or a non-cellular network) facilitating voice and/or data communication between two user equipments (UEs).

For ease of illustration, the carrier network 59 is shown in a very simplified manner to include only those portions that are relevant to the present disclosure. Thus, a communication node 64 (e.g., an evolved Node B (eNB or eNodeB) in case the carrier network 59 is an LTE network) is shown in FIG. 4 as representing the access network portion of the MNO network 59 and a core network portion 66 is shown as represented by a Mobility Management Entity (MME) 68 and a Signaling Gateway (SGW) 70. It is understood that the access network portion and the core network portion of the carrier network 59 may include many more elements or entities than those shown in FIG. 4. The subscriber device 57 may communicate with the MNO network 59 via a radio link (not shown) between the device 57 and the eNB 64. The eNB's connection to the core network 66, and the core network's connection to other packet-switched and circuit-switched networks (not shown) allow a user of the device 57 to wirelessly (and seamlessly) access many different resources or systems beyond those operating within the MNO network. 59.

When the carrier network 59 is an LTE network, the core network or core portion 66 may be an Evolved Packet Core (EPC) or a System Architecture Evolution (SAE) core. In that case, the MME 68 may function as a control node and carry out user authentication by interacting with a Home Subscriber Server 78 (discussed later) in the MVNE 34. The MME 68 may support initial attach and intra-LTE handover for a UE. The MME 68 may also check the authorization of a UE to camp on the MNO's carrier network (which may be a Public Land Mobile Network (PLMN)) 59 and enforce UE-specific roaming restrictions. The MME 68 may terminate an S6a interface towards the HSS 78 as shown in FIG. 4. The SGW 70, on the other hand, routes and forwards user data packets and acts as a mobility anchor. The SGW 70 may terminate an S8 interface towards a Packet Data Network (PDN) Gateway (PGW) 79 in the MVNE 34 for relaying user traffic (including IP multimedia content) between the MNO's network 59 and the MVNE 34. In that regard, the SGW 70 may manage and store UE contexts (e.g., parameters of the IP bearer service, network internal routing information, etc.).

In case of a non-LTE network, the communication node 64 may be a base station (BS) (e.g., in a Third Generation (3G) network), or a home base station or femtocell, and may provide radio interface to the mobile handset 57. In other embodiments, the communication node 64 may include a site controller (e.g., functionalities of a 3G Radio Network Controller (RNC)), an access point (AP), a radio tower, or any other type of radio interface device capable of operating in a wireless environment. The wireless device 57 may be served by the eNB 64 because it may be physically present, registered, associated with (e.g., through RF coverage or prior handover), or operating within the eNB's 64 cell (not shown).

Although various examples in the discussion below are provided primarily In the context of an LTE network because of its capability to support high speed data access (including high speed video content delivery) at a guaranteed Quality of Service (QoS), the teachings of the present disclosure may equally apply, with suitable modifications (as may be apparent to one skilled in the art using the present teachings), to a number of different cellular and non-cellular Frequency Division Multiplex (FDM) or Time Division Multiplex (TDM) based wireless systems or networks 59. Such networks or systems may include, for example, systems/networks using Second Generation (2G), Third Generation (3G), or Fourth Generation (4G) specifications. Some examples of such systems or networks include, but not limited to, Global System for Mobile communications (GSM) networks, Telecommunications Industry Association/Electronic Industries Alliance (TIA/EIA) Interim Standard-136 (IS-136) based Time Division Multiple Access (TDMA) systems, Wideband Code Division Multiple Access (WCDMA) systems, Third Generation Partnership Project (3GPP) LTE networks, WCDMA-based High Speed Packet Access (HSPA) systems, 3GPP2's CDMA based High Rate Packet Data (HRPD) systems, CDMA2000 or TIA/EIA IS-2000 systems, Evolution-Data Optimized (EV-DO) systems, Worldwide Interoperability for Microwave Access (WiMAX) systems based on Institute of Electrical and Electronics Engineers (IEEE) standard IEEE 802.16e, International Mobile Telecommunications-Advanced (IMT-Advanced) systems (e.g., LTE Advanced systems), other Universal Terrestrial Radio Access Networks (UTRAN) or Evolved-UTRAN (E-UTRAN) networks, GSM/Enhanced Data Rate for GSM Evolution (GSM/EDGE) systems, and the like.

The Core Network (CN) portion 66 may be coupled to the communication node 56 and provide logical and control functions (e.g., account management, billing, mobility management, etc.) in the network 59. In case of an LTE carrier network, the core network portion 66 may be an Access Gateway (AGW). Regardless of the type of carrier network 59, the core network portion 66 may function to provide connection of one or more of the UEs 57 to other mobile handsets (not shown) operating in the carrier network 59 and also to other communication devices (e.g., wireline or wireless phones) or resources (e.g., an Internet website) in other voice and/or data networks external to the carrier network 59. The carrier network 59 may be a cellular telephone network or a Public Land Mobile Network (PLMN) in which the UE's 57 may be registered units (through their registration via the MVNE 34 as discussed later). However, as mentioned before, the present invention is operable in other non-cellular wireless networks as well (whether voice networks, data networks, or both). Furthermore, portions of the carrier network 59 may include, independently or in combination, any of the present or future wireline or wireless communication networks such as, for example, the PSTN, or a satellite-based communication link. In one embodiment, the network 59 may include more or less or different type of functional entities than those shown in FIG. 4.

In the embodiment shown in FIG. 4, the MVNE 34 may include the following: (a) a multimedia server 72 for offering IP multimedia services to the enterprise subscribers 40 via the mobile network 59 of the MNO 32; (b) a subscription management unit 74 to facilitate authentication and registration of enterprise's subscribers 40 with the MNO 32 via the MVNE 34; and (c) a number of IP Multimedia Subsystem (IMS) core elements 76-79 operatively coupled to the multimedia server 72, the subscription management unit 74, and the core portion 66 of the MNO's mobile network 59 as shown in FIG. 4. These IMS core elements 76-79 may "talk" to similar elements in the MNO's core network 66, via the MME 68, to facilitate delivery of high speed data associated with user-request IP multimedia services (including video content delivery) to the enterprise subscribers 40 via the mobile network 59 of the MNO 32.

In one embodiment, the multimedia server 72 may include a multimedia communications and collaboration unit 82 and a video services unit 83. The multimedia unit 82 may be an Application Server (AS), whereas the video services unit 83 may be a Video On Demand (VOD) server. The multimedia unit 82 may provide non-video multimedia content and other collaboratively-developed multimedia content (e.g., developed jointly with the MNO 32 or some other content provider), whereas the video services unit 83 may provide high-speed video content such as streaming video, VOD, or enterprise-specific video services.

The subscription management unit 74 may be configured to store a block of MNO-specific SIMs allocated to the MVNE 34 by the MNO 32, and to provide those SIMs to wireless devices 57 of the enterprise's subscribers 40. The subscription management unit 74 also may be configured to manage enabling of the enterprise 42 as a client in the MVNE 34 by assigning a unique enterprise-specific identifier to the enterprise 42.

The IMS core elements may include one or more of the following:
(1) A Call Session Control Function (CSCF) element 76 (which may be a Serving CSCF or S-CSCF) coupled to the multimedia unit 82 in the multimedia server 72 via a Session Initiation Protocol (SIP) based IP multimedia Service Control (ISC) interface. The ISC interface is an internal IMS interface that connects a call control server (here, the S-CSCF 76) with the service platform (here, the AS 82) to enable the S-CSCF 76 to request a subscriber-selected service by soliciting AS 82 for service execution.
(2) A Policy and Charging Rules Function (PCRF) element 77 coupled to the multimedia unit 82 in the multimedia server 72 via another IMS internal interface-an Rx interface-to share subscriber-specific (or enterprise-specific) policy and charging related information during provision of IP multimedia services to the subscriber unit 57.
(3) A Home Subscriber Server (HSS) element 78 coupled to the subscription management unit 74 in the MVNE 34 and to the MME 68 in the core network 66 of the MNO 32 (via an S6a interface). The HSS 78 is a central database that contains user-related and subscription-related information for enterprise subscribers 40. The HSS 78 may perform or assist in mobility management, call and session establishment, user authentication and access authorization etc. In one embodiment, the HSS 78 may be accessed by the MME 68 with the maximum bit rate allowed for the subscribers of the enterprise (as part of the enterprise-specific high speed data access guaranteed to the enterprise for its subscribers to utilize). In that case, the HSS 78 may be configured to provide subscriber profile information for enterprise's subscribers including the maximum bit rate to the subscription management unit 74.
(4) A PDN Gateway (PGW) element 79 (wherein "PDN" refers to Packet Data Network) coupled to the video services unit 83 in the multimedia server 72, and also coupled to the SGW 70 in the MNO's core network 66 (via an S8 interface) to relay user traffic between the IMS-hosting MVNE 34 and the high-speed data transfer supporting network 59 of the MNO 32. The PGW 79 may also provide connectivity to external packet data networks (such as, for example, the Internet 60 as shown in FIG. 4) by being the point of exit and entry for the data traffic to/from the user device 57. The PGW 79 may perform MVNE-specific policy enforcement, packet filtering for each user, charging support, etc. The PGW 79 may be provisioned with an Access Point Name (APN) to enable subscribers 40 (i.e., subscriber devices 57) to communicate data with the MVNE 34 via the SGW 70. The PGW 79 also may be provisioned with a Domain Name System (DNS) server for mapping Fully Qualified Domain Names (FQDNs) to respective IP addresses on the Internet 60. In one embodiment, the PGW 79 may be additionally provisioned with enterprise-specific static charging rules, and, optionally, with another APN specifically for supporting video traffic between the MVNE 34 and the MNO 32. Because of its connection to the Internet 60, the PGW 79 may facilitate a subscriber's WiFi access to the IP multimedia services of the MVNE 34 via the Internet 60, and may also facilitate the subscriber's access to the Internet through the mobile network 59 of the MNO 32.

It is noted here that a detailed discussion of IMS core elements 76-79 is not provided herein because of well-known nature of these elements and their functionalities. For example, additional information about IMS systems, their core elements, interactions among these core elements and other network entities, internal IMS interfaces, etc., may be found in many publicly-available documents such as, for example, Third Generation Partnership Project (3GPP) Technical Specifications (TS) 23.139, 23.203, 23.206, 23.228, etc. Therefore, the discussion herein primarily describes only those specific aspects of the IMS core elements 76-79 that are relevant to the instant disclosure. Additional general information about IMS systems and their core elements is incorporated herein by reference to such publicly-available resources. It is further noted that the IMS core network elements 76-79 may be essentially a collection of different functions, linked by standardized interfaces. As is known, a function may not necessarily be a node (or hardware entity); an implementer may combine two functions in one node, or split a single function into two or more nodes. Each node can also be present multiple times or each function may have multiple instances in a single network, for dimensioning, load balancing, or organizational issues. As mentioned earlier, the MVNE 34 may include the IMS core elements 76-79 as part thereof. These elements 76-79 may be implemented in various ways-e.g., within a single physical enclosure, distributed over multiple physical locations, or implemented through a cloud configuration. The MVNE 34 may own its IMS network (and, hence, IMS core elements 76-79) or may have an arrangement with another IMS network operator (not shown) allowing the MVNE 34 to have exclusive or meaningful operative control over the IMS core elements 76-79 to enable the MVNE 34 to offer IP multimedia services to the subscribers 40.

As shown in FIG. 4, the MVNE 34 may also include or support a Service Delivery Platform (SDP) 85 coupled to the subscription management unit 74. In one embodiment, the SDP 85 may use the unique enterprise-specific identifier (WP_ID) as an argument in one or more enterprise-specific registration Application Programming Interfaces (APIs) for enterprise's subscribers 40-e.g., when the MVNE 34 "registers" the subscriber (i.e., the subscriber device 57) with the MNO's network 59. The SDP 85 also may be coupled to the multimedia server 72 for service orchestration, policy management, traffic management, etc. As mentioned earlier, the SDP 85 may expose MNO's internally and externally created service(s) to MVNE's client's (i.e., enterprise's) subscribers 40 in a standardized fashion-e.g., as a set of web service interfaces or API's that can be invoked by an application on subscriber's device 57. This would allow the subscribers 40 similar access to MNO's capabilities as would be available to MNO's own subscribers 38, without the enterprise 42 being a client of the MNO 32, or losing control over or independence of its customer base (i.e., non-MNO subscribers 40). Additionally, an SDP 86 may be implemented in the MNO 32 for accessing APIs in the MNO to provide functionality, for example, such as location services.

It is noted that the terms "performing," "accomplishing," "carrying out," or other terms of similar import, are used herein to indicate that performance of a function, process, or method step by a given entity, unit, module, or element may be accomplished in hardware and/or software as desired. The entity or element may be "configured" (in hardware, via software, or both) to implement the desired functionality as per teachings of various embodiments of the present disclosure. For example, when existing hardware architecture of the multimedia server 72 cannot be modified, the multimedia server 72 according to one embodiment of the present disclosure may be suitably programmed to offer IP multimedia services to enterprise subscribers 40 (via subscriber devices 57). Similarly, the execution of a program code by one or more processors (not shown) in the MVNE 34 may cause the processor(s) to perform the MVNE-related steps outlined in FIGs. 3 and 5 and discussed herein. Similarly, one or more of the UE's 57 may be suitably configured (in hardware and/or software) to enable the UE to "understand" MVNE-originating message(s) received from the MNO's network 59.

The MVNE 34 provides a very low barrier to entry for enterprise and for telecom operators, thereby enabling the enterprise 42 to avail itself of the MNO's services without losing the enterprise's independence of customer/subscriber base. The MVNE 34 can scale down to meet specialized market needs of an enterprise's subscribers 40, and satisfy those market needs through its strategic "association" with the MNO 32. The MVNE 34 can accomplish various aspects discussed herein (e.g., providing IP multimedia services or enterprise-specific high speed data access or API access to subscribers 40) based upon the following three basic procedures:
(1) Activation of the non-MNO device (i.e., a mobile handset, User Equipment (UE), wireless terminal, or similar device of the non-MNO subscriber 40) by the MVNE 34 so that IP connection is established over the MNO's 32 network - This involves the activation of the SIM card of a non-MNO device (e.g., the device 57 in FIG. 4) by the MVNE 34. The result of this activation is that the wholesale partner's subscriber 40 is provisioned into the MVNE 34, and that the device has an IP assignment and is connected to an IP bearer of the MNO 32 using the enterprise's 42 wholesale data plan and commercial terms for API access.
(2) Registration of the enterprise subscriber 40 via MVNE 34 so that access credentials (tokens) are received - This binds the enterprise's client's identifier to the MNO identifier. The enterprise client will receive an access token as a result of this registration process (an example of which is illustrated in FIG. 5 and discussed later hereinbelow). This access token may be used in future API invocations (e.g., by enterprise subscriber 40).
(3) Invocation of APIs with access token - One or more APIs may be invoked (at a non-MNO device 57 of the enterprise subscriber 40) using the access token (and via the SDP 85 as described earlier). The access token may be used by the Service Delivery Ecosystem (SDE) (which, in one embodiment, may include different elements (e.g., as shown in FIG. 4) that constitute the MVNE 34) of the MVNE 34 to identify the user (i.e., enterprise subscriber 40) on whole behalf the API request must be executed.

More generally, particular embodiments of the present disclosure take the following into consideration to address the above three procedures: (1) the MVNE 34 as a roaming partner to the MNO 32; (2) business processes in the MVNE 34 for on-boarding of the wholesale partner/enterprise 42; (3) business processes in the MVNE 34 for on-boarding of the clients/subscribers 40 of the wholesale partner 42; (4) activation and attachment (to the MNO's network) of a non-MNO device (used by or allotted to an enterprise client 40) via the MVNE 34; (5) assignment of non-MNO subscriber's 40 access credentials by the MVNE 34 to the MNO 32 to enable the enterprise subscriber/client 40 to utilize the MVNE's IP multimedia services through the MNO's network 59; and (6) invocation of the MNO's APIs (via the MVNE 34) with non-MNO subscriber's access credentials. Each of these aspects is discussed in more detail below in conjunction with FIGs. 4 and 5.

MVNE's role as a roaming partner to MNO: To allow the MVNE 34 to function as a roaming partner to the MNO 32, a SIM management service in the subscription management unit 74 may be allocated a block of MNO SIMs (i.e., SIM numbers) to manage. The subscribers 40 of the wholesale enterprise partner 42 are then provided SIMs from this block with the enterprise's desired brand. On the MNO side, the MNO's LTE MME 68 may be provisioned with the block of SIMs allocated to the MVNE 34. This may be a one-time provisioning by the MNO 32. As a result of this provisioning, the MVNE 34 "looks" like a roaming partner (to the MNO 32) that uses the MNO's PLMN code. This means that a wholesale partner (e.g., the enterprise 42 in FIG. 2) enabled by the MVNE 34 will benefit from the MNO's roaming agreements (with other network operators or entities (not shown)).

Wholesale partner on-boarding business processes: In addition to the SIM management service mentioned above, the subscription management unit 74 in the MVNE 34 may include an Operations Support System (OSS)/Business Support System (BSS) component. The OSS/BSS component may provide a proprietary (MVNE-specific) platform for supervision, configuration, deployment and optimization of the MVNE's services, with features tailored to promote efficient working procedures in daily operations. The OSS/BSS component may provide full support for management of fault, performance, and the MVNE's system configuration, and may also provide a number of new applications that may be used in the trouble-shooting and system optimization stages. The OSS/BSS component may be implemented using a combination of hardware and/or software modules. In the embodiment of FIG. 4, the OSS/BSS/SIM management component-i.e., the subscription management unit 74-is responsible for providing business processes for on-boarding of wholesale partners 42 as "clients" in the MVNE 34. A unique Wholesale Partner Identifier (WP_ID) may be provided or assigned (by the unit 74) to the wholesale partner 42 for use in API access (by subscribers 40) and also to enable the wholesale partner 42 as a client.

Wholesale partner client on-boarding business processes: In the embodiment of FIG. 4, the MVNE SDP component 85 may be configured to provide business processes for on-boarding of the clients/subscribers 40 of the wholesale partner 42. A registration API containing arguments such as unique WP_ID (which may be received by the SDP 85 from the subscriber at step 93 discussed below with reference to FIG. 5), unique Anonymous Customer Reference (ACR), SIM_ID (of the SIM card in the subscriber's device 57), and subscriber-specific service options may be provided by the MVNE SDP 85. The identifiers, for example WP_ID, ACR, and SIM_ID, and the secrets, for example passwords, tokens, or security keys may be collectively referred to herein as subscriber/client "credentials" or subscriber-specific/service-specific "access credentials." This registration API is typically called by the wholesale partner's registration system (not shown) to accomplish the MVNE provisioning and registration of its subscribers 40 with the MNO 32 (via the MVNE 34). The MVNE provisioning may include provisioning of the MVNE's HSS 78 with subscriber-specific service profile/service options, WP_ID, SIM_ID, and ACR.

Non-MNO device activation and MNO attachment: As noted earlier, the MVNE's HSS 78 may be provisioned (e.g., by the MME 68) with the maximum bit rate allowed for the non-MNO user device 57 under applicable agreement with the MVNE 34. Enforcement of this bit rate may be performed, for example, by the MME 68 in the MNO's LTE network 59 using the standard S6a interface (shown in FIG. 4). The MNO's SGW 70 may forward traffic to a common MVNE/Internet APN via the S8 interface (shown in FIG. 4), where the MVNE PGW 79 may be provisioned with a corresponding APN profile and static charging rules per wholesale partner/enterprise 42. It is noted here that the APN may identify the PGW 79 to which the mobile data user (i.e., the user device 57) may be connected for data communication. The APN may also be used to define the type of service (e.g., Multimedia Messaging Service (MMS), video content delivery, etc.) that is to be provided by the PGW 79. The MVNE PGW 79 may also be provisioned with an enterprise DNS server (not shown) to use for FQDN mapping. As is understood, a DNS server may translate the host name or FQDN into corresponding Internet Protocol (IP) address on the Internet, and vice versa. Furthermore, the MVNE PGW 79 may also be specifically provisioned with a video services APN for supporting video traffic between the MVNE 34 and the MNO 32 over performance optimized link (i.e., via MNO's high-speed LTE network 59) for improved performance (at guaranteed QoS) over the traditional "best effort" content delivery option available over the Internet 60 via the Wi-Fi 62.

Various procedural aspects outlined above may facilitate activation and attachment of a non-MNO device (e.g., the subscriber device 57) to the MNO's network 59 via the MVNE 34.

Non-MNO subscriber access credentials assignment for services: This procedure relates to assignment of non-MNO subscriber's 40 access credentials by the MVNE 34 to the MNO 32 to enable the enterprise subscriber/client 40 to utilize the MVNE's IP multimedia services through the MNO's network 59. In this procedure, authentication, authorization, and identity mapping functionalities are provided by the API exposure SDP 85 using an Internet protocol for authentication (e.g., the OAuth protocol that enables applications to access each other's data). As is known, OAuth enables a user to login to a single application (e.g., Google, Facebook, Twitter, etc.), and share the user's data in that application with other applications without logging into those other applications. In one embodiment of the present disclosure, the authentication, authorization, and identity mapping functionalities may be provided by the SDP 85 using OAuth methods applied to both REST and SOAP APIs and with an extension that a requestor (e.g., the subscriber device 57) does not equal a resource owner (for example, different MNO subscribers 38 or non-MNO subscribers 40).

FIG. 5 depicts an exemplary authentication sequence 90 for initial registration of a non-MNO subscriber device (e.g., the device 57 in FIG. 4) in an MNO network (e.g., the MNO network 59 in FIG. 4). In FIG. 5, for ease of discussion, the authorization and authentication functionalities provided by the subscription management unit 74 are represented separately using the subscription unit's 74 component functions-an MVNE authorization server 74A, and an MVNE authentication server 74B. (In one embodiment, the servers 74A and 74B may be implemented as a single function, component, or entity in the subscription unit 74, but are shown separately to facilitate discussion in the context of FIG. 5.) Similarly, the authentication functionality of the MME 68 in the MNO's core network 66 is represented in FIG. 5 as an "MNO authentication server" using the same reference numeral "68."

The messaging flow in FIG. 5 starts at block 92 when the wholesale partner's client (WP client) 40 invokes a service (e.g., a video content delivery application) that calls the appropriate API at the SDP 85. As a result, the client device 57 may send to the SDP 85 an InvokeService message 93 containing wholesale partner identifier (WP_ID) and earlier-mentioned Anonymous Customer Reference (ACR). The SDP 85 may check (at step 94) whether the WP_ID is allowed to access the requested API(s), and may also check (at step 95) policies and throttling limits (e.g., maximum bit rate) associated with the WP_ID. Upon approval of the client's InvokeService request, the SDP 85 may intimate the client device 57 to proceed with authorization (as indicated by the Redirect Authorize scopes instruction 96), wherein a scope indicates what data and permissions a requestor is permitted to access. The client device 57 may then request authorization (using Authorize scopes request 97) from the MVNE authorization server 74A, which may first instruct the client (via Redirect Authenticate Requestor message 98) to obtain authentication. The client device 57 may request authentication (through an Authenticate Requestor message 99) from the MVNE authentication server 74B, which may send a HyperText Mark-up Language (html) login form to the client device (e.g., via the SDP 85) at step 100. The subscriber 40 may enter its client credentials as requested in the login form (step 101). The MVNE authentication server 74B may validate the received client credentials (such as WP-ID plus ACR and password) with those stored in the MVNE-based HSS 78 (step 102). Upon positive verification of client credentials with the credentials stored in the HSS 78, Requestor Authentication is complete (step 103). The MVNE authentication sever 74B then instructs the client device 57 (via an authorization redirect message 104) to continue with the authorization process. In response, the client device 57 again approaches the MVNE authorization server 74A (at step 105) to get consent or authorization for access to MVNE-based subscriber-requested services) via the MNO's network 59. The MVNE authorization sever 74A may then assign the non-MNO subscriber's 40 service-specific access credentials (e.g., WP_ID, ACR, etc.) to the MNO 32 by binding the wholesale partner's client's 40 identifier (i.e., ACR) to the MNO identifier for a specified duration, as indicated by the GetMNOIdentityBinding message 106 and the MNO_ACR response message 107 in FIG. 5. The binding between the MNO identifier and WP client's ACR (as reflected in the MNO_ACR message 107) may be considered as a "registration" of the client 40 (i.e., the client device 57) in the MNO's network 59, which would allow the client 40 to obtain the requested IP multimedia service from the MVNE 34 at the enterprise-specific guaranteed QoS using MNO's infrastructure/network 59. The WP client 40 may receive an access token from the MVNE authorization server 74A as a result of this registration process, as indicated at step 108. This access token will be used by the client device 57 in future API invocations as discussed below.

Thus, in summary, the registration flow 90 in FIG. 5 generally involves the following: (i) authentication of requestor of API, (ii) authorization for access to information, (iii) mapping of MVNE ID to MNO ID for a specified duration, and (iv) return of token. As mentioned, the purpose of the acquisition of client's services credentials is to bind the wholesale partner's client's identifier to the MNO identifier for a specified duration to enable the client to receive a "token" to access requested service(s) from the MVNE 34 via MNO's network 59.

Invocation of MNO APIs with access credentials: The client device 57 uses the token returned via the registration process (step 108 in FIG. 5) for API access of the MVNE SDP 85. Broadly speaking, the access token allows the enterprise subscriber to avail itself of the high speed data access associated with a subscriber-requested IP multimedia service through the mobile network of the MNO. As mentioned earlier, because the MVNE 34 is being modeled as a roaming partner to the MNO 32, the MNO's APIs may be exposed to enterprise subscribers 40 via the MVNE SDP 85. Using the device 57, the non-MNO subscriber 40 may invoke these APIs (via the MVNE SDP 85) with the subscriber's access credentials. The access token may be used for such invocation. In one embodiment, the client device 57 may send the access token to the SDP 85 containing one or more of the following information: the unique application identifier for the application that is using the API(s), the requestor (i.e., subscriber 40) identification, the WP_ID, the ACR, and the duration that the token is valid.

As a result of the SDP's 85 acceptance of the client's access token (containing related information for API access), the non-MNO subscriber 40 can now access the MNO's APIs and the MVNE's IP multimedia services (at a guaranteed QoS) in a seamless manner.

It is noted here that the MVNE 34 with IMS core elements 76-79 may facilitate fixed-mobile convergence as well. In other words, the client device 57 may access the MVNE's service capabilities via the high-speed MNO network 59 using a fixed domain (e.g., a Digital Subscriber Loop (DSL) or Ethernet based connection), a wireless domain (e.g., Wireless Local Area Network (WiLAN), WiMAX, etc.), a mobile domain (e.g., a GSM, GPRS, or CDMA network), or a combination of these domains. Thus, the MVNE 34 according to particular embodiments of the present disclosure provides a richer environment for high-speed data services to non-MNO clients/subscribers.

In the preceding description, for purposes of explanation and not limitation, specific details are set forth (such as particular architectures, interfaces, techniques, etc.) in order to provide a thorough understanding of the disclosed technology. However, it will be apparent to those skilled in the art that the disclosed technology may be practiced in other embodiments that depart from these specific details. That is, those skilled in the art will be able to devise various arrangements which, although not explicitly described or shown herein, embody the principles of the disclosed technology. In some instances, detailed descriptions of well-known devices, circuits, and methods are omitted so as not to obscure the description of the disclosed technology with unnecessary detail. All statements herein reciting principles, aspects, and embodiments of the disclosed technology, as well as specific examples thereof, are intended to encompass both structural and functional equivalents thereof. Additionally, it is intended that such equivalents include both currently known equivalents as well as equivalents developed in the future, e.g., any elements developed that perform the same function, regardless of structure.

Thus, for example, it will be appreciated by those skilled in the art that block diagrams herein (e.g., in FIG. 4) can represent conceptual views of illustrative circuitry or other functional units embodying the principles of the technology. Similarly, it will be appreciated that the flow chart in FIG. 3, the messaging sequence in FIG. 5, and the like represent various processes which may be substantially represented in a computer readable medium and so executed by a computer or processor, whether or not such computer or processor is explicitly shown. The processor may include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), and/or a state machine. Some or all of the functionalities described above as being provided by the MVNE 34 or another entity having similar functionality may be provided by the processor executing instructions stored on a computer-readable data storage medium (not shown).

The computer-readable data storage medium may be a non-transitory data storage medium containing a computer program, software, or firmware for execution by a general purpose computer or a processor mentioned above. Examples of computer-readable storage media include a Read Only Memory (ROM), a Random Access Memory (RAM), a digital register, a cache memory, semiconductor memory devices, magnetic media such as internal hard disks, magnetic tapes and removable disks, magneto-optical media, and optical media such as CD-ROM disks and Digital Versatile Disks (DVDs).

Alternative embodiments of the MVNE 34 may include additional components responsible for providing additional functionality, including any of the functionality identified above and/or any functionality necessary to support the solution as per the teachings of the present disclosure. Although features and elements are described above in particular combinations, each feature or element can be used alone without the other features and elements or in various combinations with or without other features. As mentioned before, the functions of the various elements-including functional blocks shown in FIGs. 2-4-may be provided through the use of hardware (such as circuit hardware) and/or hardware capable of executing software in the form of coded instructions stored on a computer-readable data storage medium (mentioned above). Thus, such functions and illustrated functional blocks are to be understood as being either hardware-implemented and/or computer-implemented, and thus machine-implemented.

The foregoing describes an MVNE-based solution that enables subscribers of an enterprise (which itself is not a client of an MNO, but is a client of the MVNE) to utilize a high speed data access at a guaranteed QoS, or to access APIs, through a mobile network of the MNO. The MVNE is configured to include a plurality of IMS core elements to facilitate delivery of high speed data associated with IP multimedia services (which may include heavy video or audio-visual content) to the subscribers of the enterprise via the mobile network of the MNO. The impact to the MNO is minimized by modeling the MVNE as a roaming partner to the MNO. The MNO can leverage its existing roaming agreement with the MVNE without the need to negotiate any extra agreements with the MVNE. Further, allocation and utilization of an MNO's SIM card numbering by the MVNE would minimize the barrier to entry for the enterprises served by the MVNE. In case of the MNO, its association with the MVNE enables the MNO to exploit its service capabilities to provide monetizeable services to MVNE's subscribers.

As will be recognized by those skilled in the art, the innovative concepts described in the present application can be modified and varied over a wide range of applications. Accordingly, the scope of patented subject matter should not be limited to any of the specific exemplary teachings discussed above, but is instead defined by the following claims.

## Claims

1. A Mobile Virtual Network Enabler, MVNE, (34) for enabling subscribers (40) of an enterprise (42) to utilize an enterprise-specific high speed data access at a guaranteed Quality of Service, QoS, through a mobile network (59) of a Mobile Network Operator, MNO, (32) associated with the MVNE, wherein the enterprise is a client of the MVNE, and the enterprise and the subscribers of the enterprise are not clients of the MNO, and wherein the MVNE comprises:
a multimedia server (72) for offering Internet Protocol, IP, multimedia services to the subscribers of the enterprise via the mobile network of the MNO;
a subscription management unit (74) configured to facilitate authentication and registration of the enterprise's subscribers with the MNO via the MVNE and to allow the MVNE to function as a roaming partner to the MNO, wherein the subscription management unit aggregates a number of subscribers from a plurality of enterprise clients of the MVNE to obtain wholesale pricing from the MNO for each enterprise client of the MVNE;
a Service Delivery Platform, SDP, (85) coupled to the subscription management unit to expose one or more Application Programming Interfaces, APIs, of the MNO to the subscribers of the enterprise even though the subscribers of the enterprise are not clients of the MNO; and
a plurality of IP Multimedia Subsystem, IMS, core elements (76, 77, 78, 79) operatively coupled to the multimedia server, the subscription management unit, and a core portion (66) of the MNO's mobile network to facilitate delivery of high speed data associated with the IP multimedia services to the subscribers of the enterprise via the mobile network of the MNO at the guaranteed QoS.

2. The MVNE of claim 1, wherein the subscription management unit is configured to:
store a block of MNO-specific Subscriber Identification Modules, SIMs, allocated to the MVNE by the MNO; and
provide SIMs to wireless devices (57) of the subscribers of the enterprise from the block of the MNO-specific SIMs stored therein because of the MVNE's status as the roaming partner to the MNO.

3. The MVNE of claim 1, wherein the subscription management unit is configured to manage enabling of the enterprise as a client in the MVNE by assigning a unique enterprise-specific identifier to the enterprise.

4. The MVNE of claim 3, wherein the SDP is configured to use the unique enterprise-specific identifier to provide an enterprise-specific registration API for an enterprise subscriber when the subscriber is being registered with the MNO via the MVNE.

5. The MVNE of claim 4, wherein the subscription management unit is configured to provide (100) a log-in form to the enterprise subscriber via the SDP so as to enable the enterprise subscriber to provide subscriber-specific credentials to the MVNE for verification.

6. The MVNE of claim 4, wherein the subscription management unit is configured to bind (106) a subscriber-specific identifier of the enterprise subscriber with an MNO identifier of the MNO for a specified duration, and provide (108) an access token to the enterprise subscriber for access to one or more APIs of the MNO being exposed via the SDP.

7. The MVNE of claim 6, wherein the SDP is configured to receive the access token from the enterprise subscriber, wherein the received access token includes one or more of the following: a unique application identifier for a subscriber-selected application that is using an API being requested through the access token; the subscriber-specific identifier; the unique enterprise-specific identifier; and a value for the duration the access token is valid.

8. The MVNE of claim 1, wherein the multimedia server includes a Video On Demand, VOD, server (83).

9. The MVNE of claim 1, wherein the plurality of IMS core elements includes:
a Home Subscriber Server, HSS, (78) coupled to the subscription management unit in the MVNE and to a Mobility Management Entity, MME, (68) in the core portion of the MNO's mobile network, wherein the HSS is provisioned by the MME with the maximum bit rate allowed for the subscribers of the enterprise to support the guaranteed QoS, and wherein the HSS is configured to provide subscriber profile information for enterprise's subscribers including the maximum bit rate to the subscription management unit; and
a Packet Data Network Gateway, PGW, (79) coupled to a Signaling Gateway, SGW, (70) in the core portion of the MNO's mobile network and to the multimedia server in the MVNE, wherein the PGW is provisioned with at least one of the following:
a first Access Point Name, APN, to enable subscribers of the enterprise to communicate data with the MVNE via the SGW in the MNO's mobile network,
a Domain Name System, DNS, server for mapping Fully Qualified Domain Names, FQDNs, to respective IP addresses, enterprise-specific static charging rules, and
a second APN for supporting video traffic between the MVNE and the MNO.

10. The MVNE of claim 9, wherein the PGW is further coupled to the Internet (60) for allowing at least one of the following to the subscribers of the enterprise:
Wireless Fidelity, Wi-Fi, (62) access to the IP multimedia services of the MVNE via the Internet; and
access to the Internet through the mobile network of the MNO.

11. The MVNE of claim 9, wherein the plurality of IMS core elements further includes:
a Policy and Charging Rules Function, PCRF, (77) coupled to the multimedia server; and
a Call Session Control Function, CSCF, (76) coupled to the multimedia server.

12. A method (44) of operating a Mobile Virtual Network Enabler, MVNE, (34) for enabling subscribers (40) of an enterprise (42) to utilize an enterprise-specific high speed data access at a guaranteed Quality of Service, QoS, through a mobile network (59) of a Mobile Network Operator, MNO, (32) associated with the MVNE, wherein the enterprise is a client of the MVNE, and wherein the enterprise and the subscribers of the enterprise are not clients of the MNO, and wherein the method comprises:
the MVNE using (46) a multimedia server (72) therein to offer Internet Protocol, IP, multimedia services to the subscribers of the enterprise via the mobile network of the MNO;
the MVNE using (48) a subscription management unit (74) therein to facilitate authentication and registration of enterprise's subscribers with the MNO via the MVNE and to allow the MVNE to function as a roaming partner to the MNO, wherein the subscription management unit aggregates a number of subscribers from a plurality of enterprise clients of the MVNE to obtain wholesale pricing from the MNO for each enterprise client of the MVNE;
the MVNE using a Service Delivery Platform, SDP, (85) therein to expose one or more Application Programming Interfaces, APIs, of the MNO to the subscribers of the enterprise even though the subscribers of the enterprise are not clients of the MNO, wherein the SDP is coupled to the subscription management unit; and
the MVNE using (50) a plurality of IP Multimedia Subsystem, IMS, core elements (76, 77, 78, 79) therein to facilitate delivery of high speed data associated with the IP multimedia services to the subscribers of the enterprise via the mobile network of the MNO at the guaranteed QoS, wherein the plurality of IMS core elements is operatively coupled to the multimedia server, the subscription management unit, and a core portion (66) of the MNO's mobile network.

13. The method of claim 12, wherein the multimedia server includes a Video On Demand, VOD, server.

14. The method of claim 12, further comprising:
the MVNE receiving (93) a service request from an enterprise subscriber for an IP multimedia service;
the MVNE authenticating the enterprise subscriber using the subscription management unit; and
the MVNE using the subscription management unit to send (108) an access token to the enterprise subscriber upon positive authentication thereof, wherein the access token is to be used by the enterprise subscriber to utilize high speed data access associated with the requested IP multimedia service through the mobile network of the MNO.

15. The method of claim 14, further comprising:
prior to sending the access token, the MVNE using the subscription management unit to bind (106) a subscriber-specific identifier of the enterprise subscriber with an MNO identifier of the MNO for a specified duration.

## Patentansprüche

1. Mobiler virtueller Netzwerkaktivator (MVNE) (34) zum Aktivieren von Teilnehmern (40) eines Unternehmens (42), um einen unternehmensspezifischen Hochgeschwindigkeitsdatenzugang mit einer garantierten Dienstqualität (QoS) durch ein mobiles Netzwerk (59) eines Mobilnetzwerkbetreibers (MNO) (32) zu nutzen, der mit dem MVNE verknüpft ist, wobei das Unternehmen ein Kunde des MVNE ist und das Unternehmen und die Teilnehmer des Unternehmens keine Kunden des MNO sind und wobei der MVNE Folgendes umfasst:
einen Multimediaserver (72) zum Anbieten von Internetprotokoll (IP)-Multimediadiensten für die Teilnehmer des Unternehmens über das mobile Netzwerk des MNO;
eine Teilnahmeverwaltungseinheit (74), die dazu konfiguriert ist, Authentifizierung und Registrierung der Teilnehmer des Unternehmens bei dem MNO über den MVNE zu ermöglichen und dem MVNE zu gestatten, als ein Roamingpartner für den MNO zu funktionieren, wobei die Teilnahmeverwaltungseinheit eine Anzahl von Teilnehmern von einer Vielzahl von Unternehmenskunden des MVNE zusammenfasst, um Großhändlerpreisgestaltung von dem MNO für jeden Unternehmenskunden des MVNE zu erlangen;
eine Dienstbereitstellungsplattform (SDP) (85), die mit der Teilnahmeverwaltungseinheit gekoppelt ist, um eine oder mehrere Anwendungsprogrammierschnittstellen (API) des MNO für die Teilnehmer des Unternehmens freizugeben, auch wenn die Teilnehmer des Unternehmens keine Kunden des MNO sind; und
eine Vielzahl von IP-Multimedia-Subsystem (IMS)-Kernelementen (76, 77, 78, 79), die operativ mit dem Multimediaserver, der Teilnahmeverwaltungseinheit und einem Kernabschnitt (66) des mobilen Netzwerks des MNO gekoppelt ist, um Bereitstellung von Hochgeschwindigkeitsdaten, die mit den IP-Multimediadiensten verknüpft sind, an die Teilnehmer des Unternehmens über das mobile Netzwerk des MNO mit der garantierten QoS zu ermöglichen.

2. MVNE nach Anspruch 1, wobei die Teilnahmeverwaltungseinheit dazu konfiguriert ist:
einen Block von MNO-spezifischen Teilnehmeridentifikationsmodulen (SIM), die dem MVNE durch den MNO zugewiesen sind, zu speichern; und
SIM an drahtlose Vorrichtungen (57) der Teilnehmer des Unternehmens von dem Block der darin gespeicherten MNO-spezifischen SIM aufgrund des Status des MVNE als der Roamingpartner des MNO bereitzustellen.

3. MVNE nach Anspruch 1, wobei die Teilnahmeverwaltungseinheit dazu konfiguriert ist, das Aktivieren des Unternehmens als ein Kunde in dem MVNE durch Zuordnen einer einzigartigen unternehmensspezifischen Kennung für das Unternehmen zu verwalten.

4. MVNE nach Anspruch 3, wobei die SDP dazu konfiguriert ist, die einzigartige unternehmensspezifische Kennung zu verwenden, um eine unternehmensspezifische Registrierungs-API für einen Unternehmensteilnehmer bereitzustellen, wenn der Teilnehmer über den MVNE bei dem MNO registriert wird.

5. MVNE nach Anspruch 4, wobei die Teilnahmeverwaltungseinheit dazu konfiguriert ist, dem Unternehmensteilnehmer über die SDP eine Form zum Einloggen bereitzustellen (100), um den Unternehmensteilnehmer zu aktivieren, um dem MVNE teilnehmerspezifische Zugangsdaten zur Verifizierung bereitzustellen.

6. MVNE nach Anspruch 4, wobei die Teilnahmeverwaltungseinheit dazu konfiguriert ist, eine teilnehmerspezifische Kennung des Unternehmensteilnehmers für eine festgelegte Dauer mit einer MNO-Kennung des MNO zu verbinden (106) und dem Unternehmensteilnehmer einen Zugangstoken für Zugang zu einer oder mehreren API des MNO, der über die SDP freigegeben ist, bereitzustellen (108).

7. MVNE nach Anspruch 6, wobei die SDP dazu konfiguriert ist, den Zugangstoken von dem Unternehmensteilnehmer zu empfangen, wobei der empfangene Zugangstoken eines oder mehrere der Folgenden umfasst: eine einzigartige Anwendungskennung für eine vom Teilnehmer ausgewählte Anwendung, die eine API verwendet, die durch den Zugangstoken angefordert wird; die teilnehmerspezifische Kennung; die einzigartige unternehmensspezifische Kennung; und einen Wert für die Dauer, für die der Zugangstoken gültig ist.

8. MVNE nach Anspruch 1, wobei der Multimediaserver einen Video-on-Demand (VOD)-Server (83) beinhaltet.

9. MVNE nach Anspruch 1, wobei die Vielzahl von IMS-Kernelementen Folgendes beinhaltet:
einen Home Subscriber Server (HSS) (78), der mit der Teilnahmeverwaltungseinheit in dem MVNE und einer Mobilitätsverwaltungseinheit (MME) (68) in dem Kernabschnitt des mobilen Netzwerks des MNO gekoppelt ist, wobei der HSS durch die MME mit der maximalen Bitrate, die für die Teilnehmer des Unternehmens zulässig ist, versorgt wird, um die garantierte QoS zu unterstützen, und wobei der HSS dazu konfiguriert ist, der Teilnahmeverwaltungseinheit Teilnehmerprofilinformationen für Teilnehmer der Unternehmens, einschließlich der maximalen Bitrate, bereitzustellen; und
einen Paketdatennetzwerk-Gateway (PGW) (79), das mit einem Signalisierungs-Gateway (SGW) (70) in dem Kernabschnitt des mobilen Netzwerks des MNO und mit dem Multimediaserver in dem MVNE gekoppelt ist, wobei das PGW mit mindestens einem der Folgenden versorgt wird:
einem ersten Zugangspunktnamen (APN), um Teilnehmer des Unternehmens zu aktivieren, um Daten mit dem MVNE über den SGW in dem mobilen Netzwerk des MNO zu kommunizieren,
einem Domainnamensystem (DNS)-Server zum Abbilden von vollqualifizierten Domainnamen (FQDN) auf jeweilige IP-Adressen,
unternehmensspezifische statische Abrechnungsregeln, und
einem zweiten APN zum Unterstützen von Videoverkehr zwischen dem MVNE und dem MNO.

10. MVNE nach Anspruch 9, wobei das PGW ferner mit dem Internet (60) gekoppelt ist, um mindestens eines der Folgenden für die Teilnehmer des Unternehmens zu gestatten:
Wireless Fidelity (WiFi) (62)-Zugang zu den IP-Multimediadiensten des MVNE über das Internet; und
Zugang zum Internet durch das mobile Netzwerk des MNO.

11. MVNE nach Anspruch 9, wobei die Vielzahl von IMS-Kernelementen ferner Folgendes beinhaltet:
eine Richtlinien- und Abrechnungsregelfunktion (PCRF) (77), die mit dem Multimediaserver gekoppelt ist; und
eine Call-Session-Steuerfunktion (CSCF) (76), die mit dem Multimediaserver gekoppelt ist.

12. Verfahren (44) zum Betreiben eines mobilen virtuellen Netzwerkaktivators (MVNE) (34) zum Aktivieren von Teilnehmern (40) eines Unternehmens (42), um einen unternehmensspezifischen Hochgeschwindigkeitsdatenzugang mit einer garantierten Dienstqualität (QoS) durch ein mobiles Netzwerk (59) eines Mobilnetzwerkbetreibers (MNO) (32) zu nutzen, der mit dem MVNE verknüpft ist, wobei das Unternehmen ein Kunde des MVNE ist und wobei das Unternehmen und die Teilnehmer des Unternehmens keine Kunden des MNO sind und wobei das Verfahren Folgendes umfasst:
dass der MVNE einen Multimediaserver (72) darin verwendet (46), um Internetprotokoll (IP)-Multimediadienste für die Teilnehmer des Unternehmens über das mobile Netzwerk des MNO anzubieten;
dass der MVNE eine Teilnahmeverwaltungseinheit (74) darin verwendet (48), um Authentifizierung und Registrierung der Teilnehmer des Unternehmens bei dem MNO über den MVNE zu ermöglichen und dem MVNE zu gestatten, als ein Roamingpartner für den MNO zu funktionieren, wobei die Teilnahmeverwaltungseinheit eine Anzahl von Teilnehmern von einer Vielzahl von Unternehmenskunden des MVNE zusammenfasst, um Großhändlerpreisgestaltung von dem MNO für jeden Unternehmenskunden des MVNE zu erlangen;
dass der MVNE eine Dienstbereitstellungsplattform (SDP) (85) darin verwendet, um eine oder mehrere Anwendungsprogrammierschnittstellen (API) des MNO für die Teilnehmer des Unternehmens freizugeben, auch wenn die Teilnehmer des Unternehmens keine Kunden des MNO sind; und
dass der MVNE eine Vielzahl von IP-Multimedia-Subsystem (IMS)-Kernelementen (76, 77, 78, 79) darin verwendet (50), um Bereitstellung von Hochgeschwindigkeitsdaten, die mit den IP-Multimediadiensten verknüpft sind, an die Teilnehmer der Unternehmens über das mobile Netzwerk des MNO mit der garantierten QoS zu ermöglichen, wobei die Vielzahl von IMS-Kernelementen operativ mit dem Multimediaserver, der Teilnahmeverwaltungseinheit und einem Kernabschnitt (66) des mobilen Netzwerks des MNO gekoppelt ist.

13. Verfahren nach Anspruch 12, wobei der Multimediaserver einen Video-on-Demand (VOD)-Server beinhaltet.

14. Verfahren nach Anspruch 12, ferner umfassend:
dass der MVNE eine Dienstanforderung von einem Unternehmensteilnehmer für einen IP-Multimediadienst empfängt (93) ;
dass der MVNE den Unternehmensteilnehmer unter Verwendung der Teilnahmeverwaltungseinheit authentifiziert; und
dass der MVNE die Teilnahmeverwaltungseinheit verwendet, um einen Zugangstoken an den Unternehmensteilnehmer bei dessen positiver Authentifizierung zu senden (108), wobei der Zugangstoken durch den Unternehmensteilnehmer zu verwenden ist, um Hochgeschwindigkeitsdatenzugang, der mit dem angeforderten IP-Multimediadienst verknüpft ist, durch das mobile Netzwerk des MNO zu nutzen.

15. Verfahren nach Anspruch 14, ferner umfassend:
dass der MVNE vor dem Senden des Zugangstokens die Teilnahmeverwaltungseinheit verwendet, um eine teilnehmerspezifische Kennung des Unternehmensteilnehmers mit einer MNO-Kennung des MNO für eine festgelegte Dauer zu verbinden (106).

## Revendications

1. Facilitateur de réseau virtuel mobile, MVNE, (34) pour faciliter à des abonnés (40) d'une entreprise (42) d'utiliser un accès à des données à grande vitesse spécifique à l'entreprise à une qualité de service, QoS, garantie par le biais d'un réseau mobile (59) d'un opérateur de réseau mobile, MNO, (32) associé au MVNE, dans lequel l'entreprise est un client du MVNE, et l'entreprise et les abonnés de l'entreprise ne sont pas des clients du MNO, et dans lequel le MVNE comprend :
un serveur multimédia (72) pour offrir des services multimédias de protocole Internet, IP, aux abonnés de l'entreprise via le réseau mobile du MNO ;
une unité de gestion d'abonnements (74) configurée pour faciliter une authentification et un enregistrement des abonnés de l'entreprise avec le MNO via le MVNE et pour permettre au MVNE de fonctionner en tant que partenaire d'itinérance pour le MNO, dans lequel l'unité de gestion d'abonnement regroupe un nombre d'abonnés à partir d'une pluralité de clients d'entreprise du MVNE pour obtenir un prix de grossiste du MNO pour chaque client d'entreprise du MVNE ;
une plateforme de distribution de services, SDP, (85) couplée à l'unité de gestion d'abonnement pour exposer une ou plusieurs interfaces de programmation d'application, API, du MNO aux abonnés de l'entreprise même si les abonnés de l'entreprise ne sont pas des clients du MNO ; et
une pluralité d'éléments coeurs de sous-système multimédia IP, IMS, (76, 77, 78, 79) couplés de manière fonctionnelle au serveur multimédia, à l'unité de gestion d'abonnement et à une partie coeur (66) du réseau mobile du MNO pour faciliter la distribution de données à grande vitesse associées aux services multimédias IP aux abonnés de l'entreprise via le réseau mobile du MNO à la QoS garantie.

2. MVNE selon la revendication 1, dans lequel l'unité de gestion d'abonnement est configurée pour :
stocker un bloc de modules d'identification d'abonné, SIM, spécifiques au MNO attribués au MVNE par le MNO ; et
fournir des SIM à des dispositifs sans fil (57) des abonnés de l'entreprise à partir du bloc des SIM spécifiques au MNO stockés dans celui-ci à cause du statut du MVNE en tant que partenaire d'itinérance pour le MNO.

3. MVNE selon la revendication 1, dans lequel l'unité de gestion d'abonnement est configurée pour gérer la facilitation de l'entreprise en tant que client dans le MVNE par attribut d'un unique identifiant, spécifique à l'entreprise, à l'entreprise.

4. MVNE selon la revendication 3, dans lequel la SDP est configurée pour utiliser l'unique identifiant spécifique à l'entreprise pour fournir une API d'enregistrement spécifique à l'entreprise pour un abonné d'entreprise lorsque l'abonné a été enregistré avec le MNO via le MVNE.

5. MVNE selon la revendication 4, dans lequel l'unité de gestion d'abonnement est configurée pour fournir (100) un formulaire de connexion à l'abonné d'entreprise via la SDP afin de faciliter à l'abonné d'entreprise de fournir des justificatifs d'identité spécifiques à l'abonné au MVNE aux fins de vérification.

6. MVNE selon la revendication 4, dans lequel l'unité de gestion d'abonnement est configurée pour relier (106) un identifiant spécifique à l'abonné de l'abonné d'entreprise à un identifiant de MNO du MNO pour une durée spécifiée, et fournir (108) un jeton d'accès à l'abonné d'entreprise pour accéder à une ou plusieurs API du MNO étant exposées via la SDP.

7. MVNE selon la revendication 6, dans lequel la SDP est configurée pour recevoir le jeton d'accès depuis l'abonné d'entreprise, dans lequel le jeton d'accès reçut inclut un ou plusieurs de ce qui suit : un identifiant d'application unique pour une application sélectionnée par un abonné qui utilise une API étant demandée par le biais du jeton d'accès ; l'identifiant spécifique à l'abonné ; l'identifiant unique spécifique à l'entreprise ; et une valeur pour la durée durant laquelle le jeton d'accès est valide.

8. MVNE selon la revendication 1, dans lequel le serveur multimédia inclut un serveur de vidéo sur demande, VOD (83).

9. MVNE selon la revendication 1, dans lequel la pluralité d'éléments coeurs IMS inclut :
un serveur d'abonné résidentiel, HSS, (78) couplé à l'unité de gestion d'abonnement dans le MVNE et à une entité de gestion de mobilité, MME, (68) dans la portion coeur du réseau mobile du MNO, dans lequel le HSS est approvisionné par la MME avec le débit binaire maximal autorisé pour les abonnés de l'entreprise pour prendre en charge la QoS garantie, et dans lequel le HSS est configuré pour fournir des informations de profil d'abonné pour des abonnés d'entreprise, incluant le débit binaire maximal, à l'unité de gestion d'abonnement ; et
une passerelle de réseau de données en mode paquets, PGW, (79) couplée à une passerelle de signalisation, SGW, (70) dans la portion coeur du réseau mobile du MNO et au serveur multimédia dans le MVNE, dans lequel la PGW est approvisionnée avec au moins un de ce qui suit :
un premier nom de point d'accès, APN, pour faciliter à des abonnés de l'entreprise de communiquer des données avec le MVNE via la SGW dans le réseau mobile du MNO,
un serveur de système de noms de domaine, DNS, pour mapper des noms de domaine entièrement qualifiés, FQDN, à des adresses IP respectives, à des règles d'imputation statiques spécifiques à l'entreprise, et
un second APN pour prendre en charge un trafic vidéo entre le MVNE et le MNO.

10. MVNE selon la revendication 9, dans lequel la PGW est en outre couplée à l'Internet (60) pour permettre au moins un de ce qui suit aux abonnés de l'entreprise :
un accès Wireless Fidelity, Wi-Fi, (62) aux services multimédias IP du MVNE via l'Internet ; et
un accès à l'Internet par le biais du réseau mobile du MNO.

11. MVNE selon la revendication 9, dans lequel la pluralité d'éléments coeurs IMS inclut en outre :
une fonction de politique et de règle de taxation, PCRF, (77) couplée au serveur multimédia ; et
une fonction de commande de session d'appel, CSCF, (76) couplée au serveur multimédia.

12. Procédé (44) d'exploitation d'un facilitateur de réseau virtuel mobile, MVNE, (34) pour faciliter à des abonnés (40) d'une entreprise (42) d'utiliser un accès à des données à grande vitesse spécifique à l'entreprise à une qualité de service, QoS, garantie par le biais d'un réseau mobile (59) d'un opérateur de réseau mobile, MNO, (32) associé au MVNE, dans lequel l'entreprise est un client du MVNE, et dans lequel l'entreprise et les abonnés de l'entreprise ne sont pas des clients du MNO, et dans lequel le procédé comprend :
le MVNE utilisant (46) un serveur multimédia (72) dans celui-ci pour offrir des services multimédias de protocole Internet, IP, aux abonnés de l'entreprise via le réseau mobile du MNO ;
le MVNE utilisant (48) une unité de gestion d'abonnement (74) dans celui-ci pour faciliter une authentification et un enregistrement d'abonnés d'entreprise avec le MNO via le MVNE et pour permettre au MVNE de fonctionner en tant que partenaire d'itinérance pour le MNO, dans lequel l'unité de gestion d'abonnement regroupe un nombre d'abonnés à partir d'une pluralité de clients d'entreprises du MVNE pour obtenir un prix de grossiste du MNO pour chaque client d'entreprise du MVNE ;
le MVNE utilisant une plateforme de distribution de services, SDP, (85) dans celui-ci pour exposer une ou plusieurs interfaces de programmation d'application, API, du MNO aux abonnés de l'entreprise même si les abonnés de l'entreprise ne sont pas des clients du MNO, dans lequel la SDP est couplée à l'unité de gestion d'abonnement ; et
le MVNE utilisant (50) une pluralité d'éléments coeurs de sous-système multimédia IP, IMS, (76, 77, 78, 79) dans celui-ci pour faciliter une distribution de données à grande vitesse, associées aux services multimédias IP, aux abonnés de l'entreprise via le réseau mobile du MNO à la QoS garantie, dans lequel la pluralité d'éléments coeurs IMS est couplée de manière fonctionnelle au serveur multimédia, à l'unité de gestion d'abonnement et à une portion coeur (66) du réseau mobile du MNO.

13. Procédé selon la revendication 12, dans lequel le serveur multimédia inclut un serveur de vidéo sur demande, VOD.

14. Procédé selon la revendication 12, comprenant en outre :
le MVNE recevant (93) une demande de service depuis un abonné d'entreprise pour un service multimédia IP ;
le MVNE authentifiant l'abonné d'entreprise à l'aide de l'unité de gestion d'abonnement ; et
le MVNE utilisant l'unité de gestion d'abonnement pour envoyer (108) un jeton d'accès à l'abonné d'entreprise lors d'une authentification positive de ce dernier, dans lequel le jeton d'accès doit être utilisé par l'abonné d'entreprise pour utiliser un accès à des données à grande vitesse associé au service multimédia IP demandé par le biais du réseau mobile du MNO.

15. Procédé selon la revendication 14, comprenant en outre : avant l'envoi du jeton d'accès, le MVNE utilisant l'unité de gestion d'abonnement pour relier (106) un identifiant spécifique à l'abonné de l'abonné d'entreprise à un identifiant de MNO du MNO pendant une durée spécifiée.
